# EUROPEAN PATENT APPLICATION

(11) **EP 0 798 020 A1**
(43) Date of publication of application: **01.10.1997**
(21) Application number: 96114944.0
(22) Date of filing: 18.09.1996
(51) Int. Cl.: A62D 3/00, B09B 3/00

(54) **Stabilization and reuse of ash**

(30) Priority: 25.03.1996 JP 67944/96
(71) Applicant: Kabushiki Kaisha Daiken Enterprise, Chuo-ku, Tokyo (JP); Ito, Katsuhiro, Chuo-ku, Tokyo (JP)
(72) Inventor: Ito, Katsuhiro, c/o K.K. Daiken Enterprise, Tokyo (JP)
(74) Representative: Casalonga, Axel

(57) **Abstract**

An apparatus (1) comprises an incinerator (4) for incinerating the incinerator ash to produce incinerated ash. The incinerated ash is fed to acid water reservation tanks (7a, 7b) where the heavy metal is allowed to be reacted with the acid water and produce a heavy metal solution and ash sludge. The solution is incinerated by a heavy metal solution incinerator (9) to collect the heavy metal. The ash sludge is dewatered by a hydroextractor (11) into swampy ash. The swampy ash is then sintered by a sintering furnace (14) into a sintered body and ground into particles.

## Description

### Background of the Invention

The present invention relates to a method and an apparatus for efficiently collecting heavy metals from incinerator ash, fly ash and the like, and for using the resultant ash sludge free of the heavy metals to produce aggregate that is essential for concrete construction. The incinerator ash is produced by and from combustion of wastes including scraps of automobiles, home appliances, and other industrial wastes such as films, printed matters discarded from a variety of factories, as well as sludge, foul solution, waste liquor, effluent, bestialities, and wet refuse from hotels and commercial food services, and the fly ash is produced in thermoelectric power plants and the like.

As industrial production and demand increase, the volume of wastes including scraps of automobiles and home appliances in dismantling industry, films, printed matters, and other industrial wastes from factories, as well as sludge, foul solution, waste liquor, effluent, bestialities, and wet refuse from hotels and commercial food services, and the volume of fly ash produced in thermoelectric power plants increase, and accordingly the disposal volume also increases.

In contrast, the treatment and disposal facilities have not been much improved in performance and capacity. Therefore, The amount of the wastes has been such that the swelling wastes might bury cities.

Waste treatment is thus an object of public concern. Though lack of awareness of those contributing such wastes may be a cause of the recent rapid increase, this issue can hardly be dismissed as the matter of awareness when considering the national economic development and convenience of life.

It is important to make constant efforts to minimize the amount of industrial wastes. There is, however, a limit to such efforts made by people. Accordingly, waste disposal and treatment industries are required to develop facilities for waste treatment and disposal of high performance to treat the swelling industrial wastes, which is urgently necessary for them.

Industrial wastes may be transported to a waste disposal site designated by a self governing body where they are landfilled. This is only transfer of the waste from the source to a designated place and is not a drastic measure to treat the waste.

In particular, there are potential environmental risks of ground pollution when a waste contaminated with a hazardous material such as a heavy metal is thrown away on or buried in the ground. Such hazardous wastes are typically covered with a special sheet to prevent the heavy metal from seeping out of the wastes into the ground. However, this sheet may be deteriorated with time or may be broken due to, for example, diastrophism. As a result, a secondary problem may arise when the encapsulated heavy metal is leaked into the ground, posing a hazard to human health, animals, and plants, or the environment.

In this respect, the competent authorities established the laws regarding the treatment and disposal of such industrial waste falling within specially controlled industrial wastes and exemplified by those contaminated with the heavy metals. The authorities also promote segregated disposal for the hazardous wastes and determined requirements for the disposal. These measures are directed to improve the performance and efficiency of treatment of the collected wastes to protect the people and the environment.

However, the present state is as follows: the competent authorities concerning the industrial waste disposal leave over to give companies positive financial aids and assistance to study and develop an improved apparatus for the waste disposal. Most of the responsibilities of the waste disposal should thus fall on firms and factories that are the source of the wastes.

Under such circumstances, the waste disposal industry tends to be considered as negative undertaking as compared with the business in manufacturers which produce articles. Furthermore, there are only a small number of companies involved in the industrial waste treatment and disposal in contrast to innumerable manufacturers in the industrial field. Only a few companies have been making studies and technical developments on measures against the waste disposal that are also limited from various viewpoints.

For example, it is known that apparatus used for the waste disposal relies on conventional incinerators operated according to an unchanged traditional method. In most firms and factories, a single incinerator is used for various kinds of industrial wastes without segregation at a differing temperature. This is quite different from an adequate waste disposal.

In particular, efficiency of incineration is significantly low in treating wastes such as scraps of automobiles and home appliances, films, printed matters, industrial wastes, sludge, foul solution, waste liquor, effluent, bestialities, and wet refuse from hotels and commercial food services. Furthermore, the resultant ash may be contaminated with a hazardous material such as a heavy metal because various divergent industrial wastes are incinerated in a single incinerator. Though the wastes are subjected to segregation before incineration, which comes to nothing when considering an outcome of it. Accordingly, the restriction produces no satisfactory results and the incinerated ash is buried in the ground with being contaminated with the heavy metal.

In more recent years, the industrial wastes are incinerated without any treatment to improve incineration efficiencies even if they are contaminated with the heavy metal that cannot be separated during the segregation. The ash contaminated with the heavy metal is encapsulated in, for example, a high strength concrete having a high durability without being landfilled. Alternatively, the ash may be mixed with a heavy metal chelating agent before being landfilled to treat it for safety disposal below a heavy metal elution prescribed by governmental regulations. However, the above mentioned high strength concrete may be deteriorated with time or damaged due to, for example, diastrophism. As a result, the encapsulated heavy metal may be seeped into the ground. This process is thus not enough for treating the hazardous wastes. On the other hand, the latter process uses the heavy metal chelating agent to immobilize the hazardous compound. However, there is also a possibility of defixation of the hazardous heavy metal. The expensive heavy metal is buried into the ground and cannot be recycled in both processes, so that these processes are not effective by the economic considerations.

In order to overcome the above mentioned problems, the present assignee or applicant have filed a Japanese Patent Application (S/N H8-781), which has not been rendered open to the public, relating to a process for stabilizing incinerator ash comprising the steps of: incinerating an incinerator ash; feeding the incinerated ash to a separator to separate impurities and iron scraps from ash sludge; transferring the separated ash sludge to a chelate reaction vessel in which a predetermined amount of surfactant and ethylenediamine tetraacetato complex (EDTA) serving as a heavy metal chelating agent are charged and agitating the mixture for a predetermined time to immobilize a heavy metal or metals contained in the ash sludge with EDTA, thereby to extract the heavy metal(s); feeding the immobilized heavy metal(s) to a chelate complex separation reaction vessel at a subsequent stage and subjecting to agitating for a predetermined time to adjust pH to an adequate level; staying the mixture for at least a predetermined time to separate the heavy metals from EDTA; feeding a heavy metal solution separated in the chelate complex separation reaction vessel a heavy metal solution drainage vessel at a subsequent stage to collect the solution; subjecting EDTA separated from the heavy metal to alkali treatment to convert acidic EDTA to 4Na EDTA; and solubilizing the 4Na EDTA and returning the solubilized 4Na EDTA to a chelate agent vessel for recycling it.

This application also relates to a process comprising the steps of: collecting ash sludge remained in a chelate reaction vessel into an ash sludge cake hopper through a dewatering assembly; feeding the collected ash sludge into a agitating unit at a subsequent stage; kneading the ash sludge with a predetermined amount of powder glass by the agitating unit; feeding the mixture to a melting furnace for melting the mixture; feeding the melt mixture to a water-cooling solidification unit to solidify the mixture; feeding the solidified mixture to a grinding unit to grind the mixture into particles of a predetermined particle size; and collecting the particles as incinerated ash aggregate.

It is also provided according to the application with an apparatus for producing aggregate using incinerator ash comprising: an incinerating unit for incinerating any waste deposit; a separating unit for separating impurities other than metals and metals such as iron scraps from incinerated ash obtained in the incinerating unit; an extracting unit for extracting a heavy metal from ash sludge after the separation; an ash sludge collecting unit for collecting ash sludge that is not extracted by the extracting unit; a agitating unit for kneading the ash sludge collected by the ash sludge collecting unit with powder glass; a melting furnace for melting the mixture of the ash sludge and the powder glass to mold the mixture into a predetermined shape; a water-cooling solidification unit for cooling the melt mixture with water to solidify it; and a grinding unit for grinding the solidified mixture into particles having a predetermined particle size.

According to the earlier technology in the application, the heavy metals can be collected effectively from the incinerator ash and/or fly ash. In addition, the EDTA used as the chelate complex agent can be recycled many times. Furthermore, the ash sludge free of heavy metals can be used to produce aggregate for concrete construction.

However, the process and apparatus described in this application still have some problems to be solved. For example, they are not cost effective and require a relatively long time for preparing the chelate complex agent. In addition, the apparatus itself is large because of the steps for converting the separated acidic EDTA into 4Na EDTA.

With this respect, the present invention is directed to solve the above mentioned problems and an object thereof is to provide an apparatus for effectively collecting heavy metals from incinerator ash produced by and from the combustion of wastes as well as fly ash produced in thermoelectric power plants to reuse sludge free of heavy metals to produce aggregate essential for concrete construction.

### Summary of the Invention

According to an aspect of the present invention, there is provided with a process for stabilizing ash contaminated with a heavy metal, comprising the steps of: incinerating the ash in an incinerator; separating dry ash by means of feeding incinerated ash produced by the incineratior into a separator; introducing the separated dry ash into an acid water reservation tank and agitating it for a predetermined time into a slurry to allow a heavy metal to be reacted with acid water and elute the heavy metal from the dry ash; and taking a heavy metal solution and subjecting the heavy metal solution to incineration treatment through a heavy metal solution incinerator to collect the heavy metal.

In addition, there is also provided with an apparatus for stabilizing and reusing ash contaminated with a heavy metal, comprising: an incinerator for incinerating the ash; an acid water reservation tank for use in making dry ash produced by the incineration into slurry to allow a heavy metal to be eluted; a heavy metal solution incinerator for incinerating a heavy metal solution eluted in the acid water reservation tank; a hydroextractor for dewatering the ash sludge remained after the heavy metal is eluted in the acid water reservation tank; a sintering furnace for sintering swampy ash after the dewatering by the hydroextractor; and grinding means for grinding a sintered body obtained by means of sintering in the sintering furnace.

The foregoing and other objects, features and advantages of the present invention will become more apparent in the light of the detailed description of the preferred embodiment thereof, as illustrated in the accompanying drawing.

### Brief Description of the Drawing

Fig. 1 is a block diagram illustrating an apparatus for stabilizing and reusing incinerator ash according to the present invention;
Fig. 2 is a view for use in describing the apparatus for stabilizing and reusing incinerator ash according to the present invention; and
Figs. 3 to 5 are views showing essentials of the apparatus in Fig. 2.

### Description

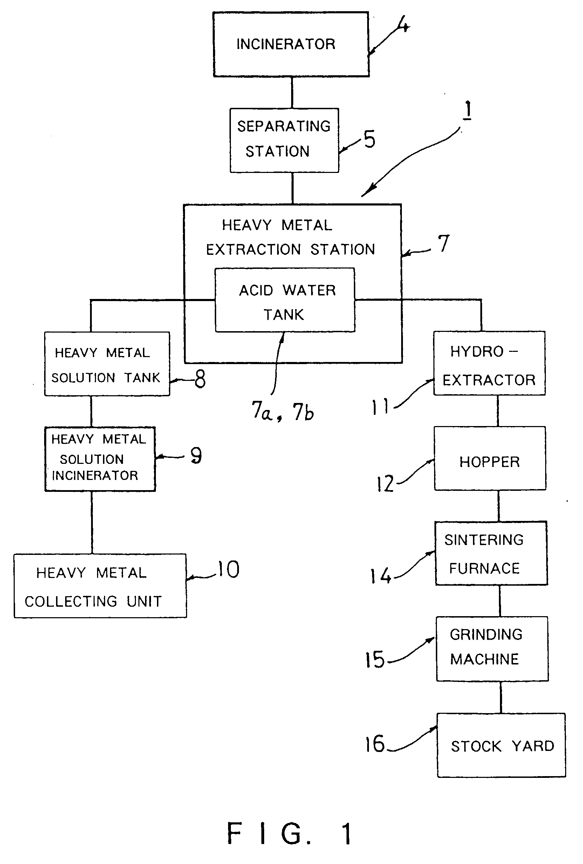

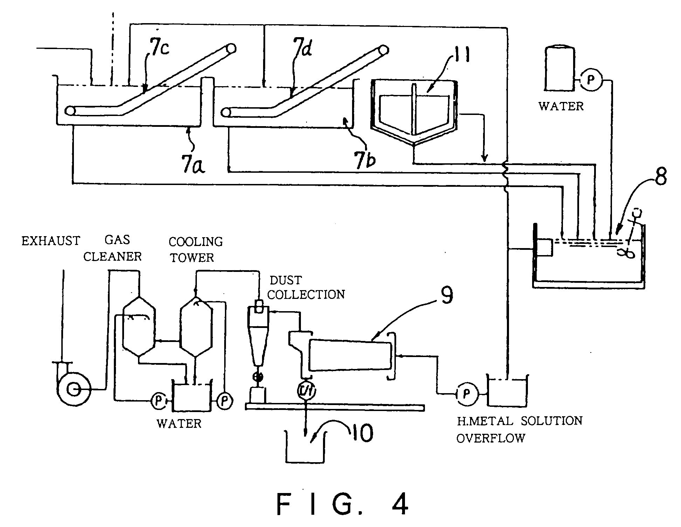

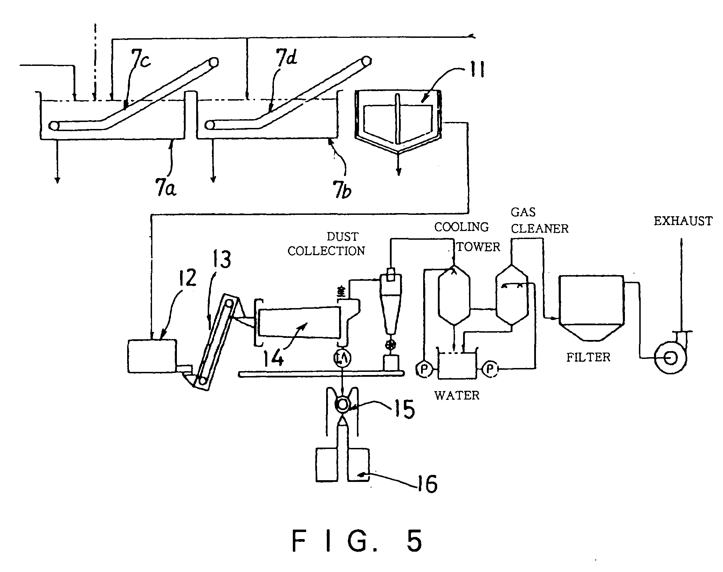

An embodiment of the apparatus for stabilizing and reusing incinerator ash according to the present invention will be described with reference to Figs 1 to 5.

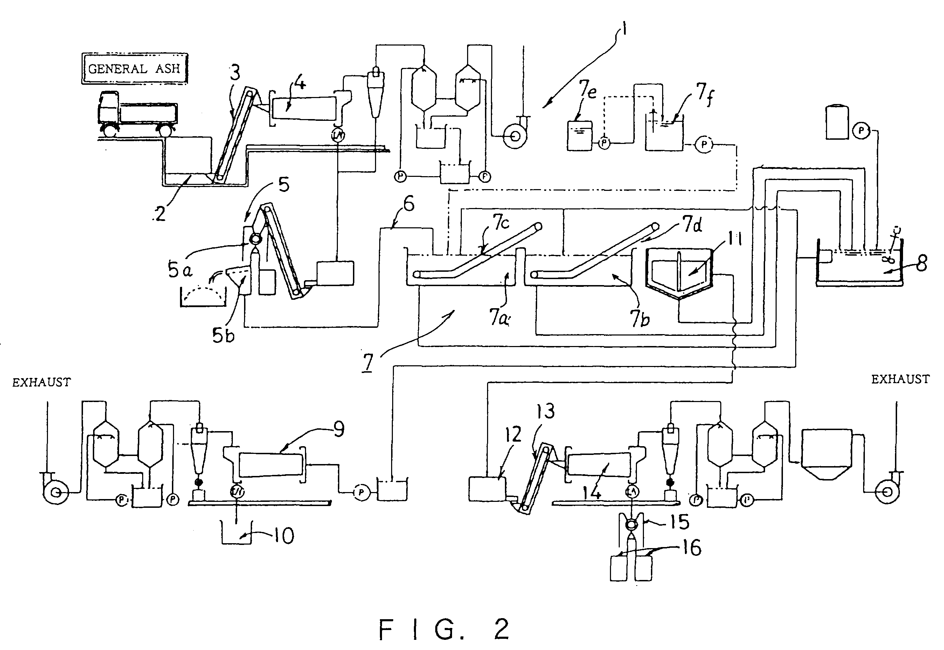

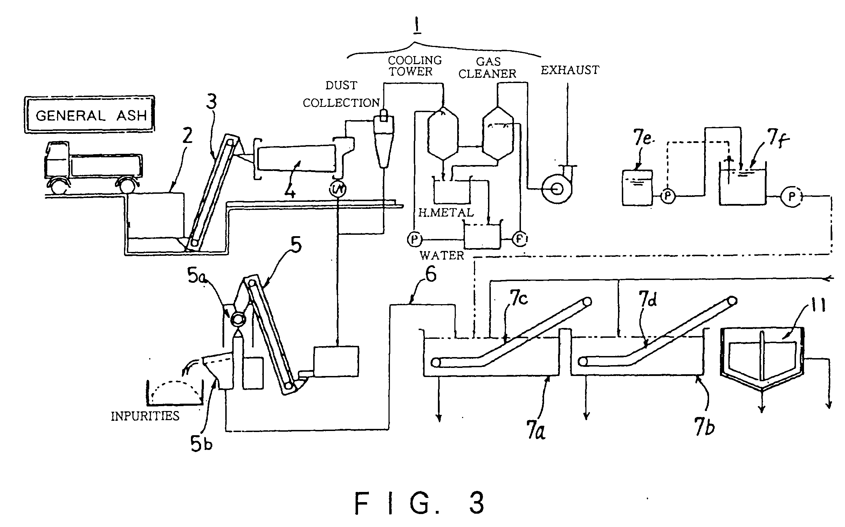

Fig. 1 is a block diagram illustrating the whole configuration of the apparatus for stabilizing and reusing incinerator ash according to the present invention. Fig. 2 is a view for use in describing the whole configuration of the apparatus for stabilizing and reusing incinerator ash according to the present invention. And Figs. 3 to 5 are views showing essentials of the apparatus.

The present invention is made aiming at the nature of heavy metals to be eluted into an acid water. This process is known as acid extraction. The acid extraction comprises two steps of mixing reaction and dehydration. The mixing step involves in feeding dry ash of, for example, general wastes and industrial wastes (in particular, hazardous wastes in industrial plants such as heavy metals) into acid water in an acid water reservation tank. The dry ash is agitated to produce a slurry thereof. In this event, the heavy metal contained in the dry ash is reacted with and eluted into the acid water. The ash sludge is then subjected to dehydration and taken out of the tank through a sludge conveyer.

The acid water in the reservation tank is adjusted to have pH of around 4.0 to react with various heavy metals (e.g., Al, Ag, Ba, Ca, Cd, Co, Cu, Fe, Hg, In, La, Li, Mg, Mn, Na, Ni, Pb, Ti, Vo, Zn, and Zr) contained in the dry ash for easy elution of the metals.

The water removed from the ash sludge during transportation with the sludge conveyer is then returned to the acid water reservation tank and is incinerated at a post step or in a solution incinerator together with the heavy metal solution into which the heavy metal is eluted.

An apparatus for stabilizing and reusing incinerator ash according to the present invention is described more in detail with reference to the drawing. The apparatus 1 according to the present invention comprises a general incinerator ash hopper 2, a bucket conveyer 3, an incinerator 4, a separating station 5, a conveyer unit 6, a heavy metal extraction station 7, a heavy metal solution tank 8, a heavy metal solution incinerator 9, a heavy metal collecting unit 10, a hydroextractor 11, a swampy ash reservation hopper 12, a bucket conveyer 13, a sintering furnace 14, a grinding machine 15, and a stock yard 16. The hopper 2 stores incinerator ash (especially those contaminated with a heavy metal) and/or fly ash. The bucket conveyer 3 is connected to the hopper 2 for conveying the incinerator ash from the hopper 2 to the incinerator 4. In this embodiment, the incinerator 4 is a rotating kiln incinerator which operates at, for example 800-960°C. The incinerator ash fed to the incinerator 4 is incinerated therein to produce incinerated ash. The separating station 5 is composed of a magnetic separator 5a and a sieve 5b for separating impurities such as pieces of glass or porcelain, or iron scraps contained in the incinerated ash transferred from the incinerator 4. In the separating station 5, the incinerated ash is separated into impurities and dry ash. The conveyer unit 6 is connected to the separating station 5 to convey the dry ash to the heavy metal extraction station 7. The heavy metal extraction station 7 is for extracting the heavy metals contained in the dry ash. More specifically, the heavy metal is reacted with and eluted into acid water in the heavy metal extraction station 7. The reaction produces an ash sludge and a heavy metal solution. For example, when lead oxide (PbO) is contained in the dry ash, the lead oxide is reacted with the acid water of pH of around 4.0. As a result of this treatment, PbCl₂ is eluted through the elution represented by the formula:

PbO + 2HCl₂ - PbCl₂ + H₂O

The heavy metal solution is fed to the heavy metal solution tank 8. The heavy metal solution tank 8 is connected to the heavy metal solution incinerator 9. The solution is supplied to and incinerated by the heavy metal solution incinerator 9. The moisture is evaporated during the incineration, leaving the heavy metal. The heavy metal is then collected by the heavy metal collecting unit 10.

On the other hand, the ash sludge is transferred to the hydroextractor 11. More specifically, the heavy metal extraction station 7 comprises ash sludge conveyers 7c and 7d through which the ash sludge is conveyed to the hydroextractor 11. The hydroextractor 11 is for removing moisture from the ash sludge to produce swampy ash. The swampy ash reservation hopper 12 is for storing the swampy ash. The bucket conveyer 13 is for conveying the swampy ash from the swampy ash reservation hopper 12. The term "swampy ash" used herein refers to the ash that is not dried completely and has a small water content. The swampy ash is then fed to the sintering furnace 14 through the bucket conveyer 13 and is sintered into a sintered body. The sintering furnace 14 is connected to the grinding machine 15 which is for grinding the sintered body into particles having a predetermined particle size. The particles are taken as aggregate or fine aggregate and stored in the stock yard 16.

The heavy metal extraction station 7 has a plurality of acid water reservation tanks for acid water having pH of around 4.0. In the illustrated embodiment, the heavy metal extraction station 7 has two acid water reservation tanks 7a and 7b. The acid water reservation tanks 7a and 7b are associated with the ash sludge conveyers 7c and 7d, respectively. The ash sludge in the acid water reservation tank 7a is transferred through the ash sludge conveyer 7c into the acid water reservation tank 7b. The ash sludge in the acid water reservation tank 7b is subjected to agitating in a agitating device (not shown) for a predetermined time to produce suspension (slurry) as in the above mentioned acid water reservation tank 7a. The heavy metal not eluted by the tank 7a and remained in the ash sludge is then reacted with the acid water in the tank 7b. The heavy metal is thus eluted and precipitated at the bottom of the tank. The resultant ash sludge is then transferred from the tank 7b through the ash sludge conveyer 7d into the hydroextractor 11 described above.

Treatment of the ash sludge with the acid water is carried out according to, for example, hydroxide treatment method or a sulfurization. The acid water is supplied to the acid water reservation tanks 7a and 7b at a predetermined amount through pH adjustment tank 7e and an acid adjustment tank 7f.

While description has not been made above, the incinerator 4, the heavy metal solution incinerator 9 and the sintering furnace 14 each has a second or later combustion chamber(s) which is equipped with a dust collector, a cooling tower, a gas cleaning tower, a bug filter, and an exhaust fan.

As mentioned above, the incinerator 4 is a rotary kiln incinerator. This incinerator is capable of incinerating directly the general waste deposit and the industrial wastes. Furthermore, this incinerator can receive the incinerator ash contaminated with a heavy metal, which otherwise may be disposed in situ after being incinerated in another incinerator. The collected incinerator ash is reincinerated by the incinerator 4. This means that the apparatus of the present invention can be applied to the incinerator ash produced in incinerating sites having no incinerator ash stabilization facilities.

According to the invention, heavy metals included in incinerator ash, fly ash, and the like can be easily extracted and treated stably. Further, ash sludge dewatered and conveyed after removing the heavy metals can be taken out as harmless ash sludge which meets to criteria regulated by the competent authority, and aggregate essential to concrete construction can be produced from the ash sludge. Furthermore, chemicals used for the acid extraction method (hydroxide treatment process or sulfurization process) are not inexpensive, and it results in low initial and running costs and other significant advantages.

While the present invention has been described in conjunction with the preferred embodiment thereof, such description is for illustrative purpose only, and it is to be understood by those skilled in the art that changes, variations, and modifications may be made without departing from the spirit and scope of the appended claims.

## Claims

1. A process for stabilizing ash contaminated with a heavy metal, comprising the steps of:
incinerating the ash in an incinerator;
separating dry ash by means of feeding incinerated ash produced by the incineratior into a separator;
introducing the separated dry ash into an acid water reservation tank and agitating it for a predetermined time into a slurry to allow a heavy metal to be reacted with acid water and elute the heavy metal from the dry ash; and
taking a heavy metal solution and subjecting the heavy metal solution to incineration treatment through a heavy metal solution incinerator to collect the heavy metal.

2. A process as claimed in Claim 1, further comprising the steps of:
dewatering ash sludge remained in the acid water reservation tank;
picking up the dewatered ash sludge successively through a sintering furnace and grinding means to produce aggregate.

3. A process as claimed in Claim 1, wherein the acid water has pH of 4.0.

4. A process as claimed in Claim 1, wherein the incinerator ash is incinerated in the incinerator at a temperature of from 800°C to 960°C.

5. A process as claimed in Claim 1, wherein a plurality of acid water reservation tanks are connected such a way that ash sludge in the acid water reservation tank at a former stage is fed to the acid water reservation tank at a later stage to further elute the heavy metal.

6. A process for stabilizing ash contaminated with a heavy metal, comprising the steps of:
incinerating the ash in an incinerator;
separating dry ash by means of feeding incinerated ash produced by the incineratior into a separator; and
introducing the separated dry ash into an acid water reservation tank for allowing a heavy metal to be reacted with acid water and elute the heavy metal from the dry ash.

7. An apparatus for stabilizing and reusing ash contaminated with a heavy metal, comprising:
an incinerator for incinerating the ash;
an acid water reservation tank for use in making dry ash produced by the incineration into slurry to allow a heavy metal to be eluted;
a heavy metal solution incinerator for incinerating a heavy metal solution eluted in the acid water reservation tank;
a hydroextractor for dewatering the ash sludge remained after the heavy metal is eluted in the acid water reservation tank;
a sintering furnace for sintering swampy ash after the dewatering by the hydroextractor; and
grinding means for grinding a sintered body obtained by means of sintering in the sintering furnace.
